# EUROPEAN PATENT APPLICATION

(11) **EP 4 836 062 A1**
(43) Date of publication of application: **04.11.2026**
(21) Application number: 24914800.8
(22) Date of filing: 01.08.2024
(51) Int. Cl.: H01M 10/0585

(54) **STACKING DEVICE, STACKING SYSTEM, AND STACKING METHOD**

(30) Priority: 03.01.2024 CN 202410012543
(71) Applicant: Contemporary Amperex Technology Co., Limited, Ningde, Fujian 352100 (CN)
(72) Inventor: HUANG, Qinkun, Ningde, Fujian 352100 (CN); ZHANG, Tianxin, Ningde, Fujian 352100 (CN); QIN, Kui, Ningde, Fujian 352100 (CN); FAN, Xiang, Ningde, Fujian 352100 (CN)
(74) Representative: Gong, Jinping
(86) International application number: PCT/CN2024/109258
(87) International publication number: WO 2025/145578

(57) **Abstract**

The present application provides a stacking device, a stacking system, and a stacking method. The stacking device comprises a separator unwinding mechanism and a stacking apparatus, and the separator unwinding mechanism is provided with an output part for outputting a separator. The stacking apparatus comprises a stacking platform for receiving the separator, the stacking platform has a first stacking position and a second stacking position in a first direction, the stacking platform is used for receiving a first electrode sheet at the first stacking position, and the stacking platform is used for receiving a second electrode sheet at the second stacking position. The polarities of the first electrode sheet and the second electrode sheet are opposite. The output part has a first output position and a second output position in the first direction, and the output part and the stacking platform can move in opposite directions. The output part is configured to switch between the second output position and the first output position when the stacking platform switches between the first stacking position and the second stacking position. The stacking device can adjust the relative position of the output part and the stacking platform more quickly, thereby reducing the movement time and stroke of the stacking platform, and improving the stacking efficiency.

## Description

### CROSS-REFERENCE TO RELATED APPLICATIONS

The present application claims priority to the Chinese Patent Application (the application number: 2024100125439) filed on January 03, 2024 and entitled "Stacking Device, Stacking System, and Stacking Method", which is incorporated herein by reference in its entirety.

### TECHNICAL FIELD

The present application relates to the field of batteries, and in particular, to a stacking device, a stacking system, and a stacking method.

### BACKGROUND

Batteries are widely used in the field of new energy, such as electric vehicles, new energy vehicles, etc. New energy vehicles and electric vehicles have become a new trend in the development of the automobile industry. An electrode assembly is a component in a battery cell in which an electrochemical reaction occurs. The electrode assembly comprises a wound electrode assembly or a stacked electrode assembly. At present, the production efficiency of the stacked electrode assembly is low.

### SUMMARY

An objective of the embodiments of the present application is to provide a stacking device, a stacking system, and a stacking method, which aim to improve the problem of the low production efficiency of a stacked electrode assembly in the related art.

In a first aspect, an embodiment of the present application provides a stacking device, comprising a separator unwinding mechanism and a stacking apparatus, wherein the separator unwinding mechanism is provided with an output part for outputting a separator; the stacking apparatus comprises a stacking platform for receiving the separator, the stacking platform has a first stacking position and a second stacking position in a first direction, the stacking platform is used for receiving a first electrode sheet at the first stacking position, the stacking platform is used for receiving a second electrode sheet at the second stacking position, and the polarities of the first electrode sheet and the second electrode sheet are opposite; the output part has a first output position and a second output position in the first direction, the output part and the stacking platform can move in opposite directions, and the output part is configured to switch between the second output position and the first output position when the stacking platform switches between the first stacking position and the second stacking position, so as to stack the first electrode sheet, the separator, and the second electrode sheet.

In the above technical solution, the output part of the stacking device can switch between the second output position and the first output position when the stacking platform switches between the first stacking position and the second stacking position, and the output part and the stacking platform can move in opposite directions, so as to enable the relative position of the output part and the stacking platform to be adjusted more quickly, so that the separator covers the first electrode sheet or the second electrode sheet more quickly, thereby reducing the movement time and stroke of the stacking platform, helping to shorten the stacking time, and improving the stacking efficiency. Moreover, since the stroke of the stacking platform is short, the space required by the stacking platform when receiving the first electrode sheet and the second electrode sheet can be reduced, which helps to improve space utilization.

As an optional technical solution of the embodiment of the present application, the separator unwinding mechanism comprises a frame, the output part is movably disposed on the frame in the first direction, and the output part is configured to be movable relative to the frame in the first direction so as to switch between the first output position and the second output position.

In the above technical solution, the output part is movably disposed on the frame in the first direction, and the output part can switch between the first output position and the second output position in a moving manner, which facilitates the control of the moving speed of the output part. When the output part moves, the pull on the separator is small, which is not easy to damage the separator and not easy to cause wrinkles on the separator.

As an optional technical solution of the embodiment of the present application, the separator unwinding mechanism comprises a first driving mechanism which is connected to the output part and is used for driving the output part to move in the first direction, so that the output part switches between the first output position and the second output position.

In the above technical solution, providing the first driving mechanism to drive the output part to move is not only beneficial to controlling the moving speed of the output part, but also beneficial to improving the automation degree of the stacking device.

As an optional technical solution of the embodiment of the present application, the output part comprises a mounting base and a roller set. The roller set is disposed on the mounting base. The roller set comprises a first roller and a second roller. The first roller and the second roller are arranged in the first direction, and a gap for the separator to pass through is formed between the first roller and the second roller.

In the above technical solution, by providing the first roller and the second roller to jointly output the separator, when the stacking platform is at the first stacking position, the separator can be wound around the first roller, and when the stacking platform is at the second stacking position, the separator can be wound around the second roller, so that the roller set can support the separator regardless of the position of the stacking platform, thereby facilitating the output of the separator. In addition, the first roller and the second roller can also play a role in smoothing the separator to a certain extent, thereby reducing the risk of wrinkling of the separator.

As an optional technical solution of the embodiment of the present application, the output part comprises a plurality of roller sets arranged in a second direction which is a stacking direction of the first electrode sheet, the separator, and the second electrode sheet.

In the above technical solution, by providing a plurality of roller sets and arranging the plurality of roller sets in the second direction, each roller set can play a role in smoothing the separator to a certain extent, thereby reducing the risk of wrinkling of the separator.

As an optional technical solution of the embodiment of the present application, the stacking apparatus comprises a base, the stacking platform is movably disposed on the base in the first direction, and the stacking platform is configured to be movable relative to the base in the first direction so as to switch between the first stacking position and the second stacking position.

In the above technical solution, the stacking platform is movably disposed on the base in the first direction, and the stacking platform can switch between the first stacking position and the second stacking position in a moving manner, which facilitates the control of the moving speed of the stacking platform. When the stacking platform moves, the pull on the separator is small, which is not easy to damage the separator and not easy to cause wrinkles on the separator. In addition, when the stacking platform moves between the first stacking position and the second stacking position, the separator can better cover the first electrode sheet or the second electrode sheet, thereby improving the stacking quality.

As an optional technical solution of the embodiment of the present application, the stacking apparatus comprises a second driving mechanism which is connected to the stacking platform and is used for driving the stacking platform to move in the first direction, so that the stacking platform switches between the first stacking position and the second stacking position.

In the above technical solution, providing the second driving mechanism to drive the stacking platform to move is not only beneficial to controlling the moving speed of the stacking platform, but also beneficial to improving the automation degree of the stacking device.

As an optional technical solution of the embodiment of the present application, the output part is configured to be movable in the first direction so as to switch between the first output position and the second output position, and a movement direction of the output part is opposite to a movement direction of the stacking platform.

In the above technical solution, the output part and the stacking platform can move in opposite directions, so as to adjust the relative position of the output part and the stacking platform more quickly, so that the separator covers the first electrode sheet or the second electrode sheet more quickly, thereby reducing the movement time and stroke of the stacking platform, helping to shorten the stacking time, and improving the stacking efficiency.

As an optional technical solution of the embodiment of the present application, the moving speed of the output part is V₁, and the moving speed of the stacking platform is V₂, satisfying: 0.8≤V₁/V₂≤1.2.

In the above technical solution, the ratio of the moving speed of the output part to the moving speed of the stacking platform is between 0.8 and 1.2, so that the moving speed of the output part is close to the moving speed of the stacking platform, and the pull on the separator is small, which is not easy to damage the separator and not easy to cause wrinkles on the separator.

As an optional technical solution of the embodiment of the present application, 0.9≤V₁/V₂≤1.1.

In the above technical solution, the ratio of the moving speed of the output part to the moving speed of the stacking platform is between 0.9 and 1.1, so that the moving speed of the output part is closer to the moving speed of the stacking platform, and the pull on the separator is smaller, which is not easier to damage the separator and not easier to cause wrinkles on the separator.

As an optional technical solution of the embodiment of the present application, V₁=V₂.

In the above technical solution, the moving speed of the output part is the same as the moving speed of the stacking platform, and the pull on the separator is smaller, which is not easier to damage the separator and not easier to cause wrinkles on the separator.

As an optional technical solution of the embodiment of the present application, the stacking apparatus comprises a pressing mechanism which is disposed on the stacking platform and is used for pressing the first electrode sheet, the separator, or the second electrode sheet against the stacking platform.

In the above technical solution, by providing the pressing mechanism, the first electrode sheet, the separator, or the second electrode sheet is pressed against the stacking platform during the process of the stacking platform switching between the first stacking position and the second stacking position, which reduces the risk of the first electrode sheet, the separator, or the second electrode sheet being detached from the stacking platform, helps to improve the reliability of the stacking device, helps to improve the stacking quality, reduces the shutdown risk, and improves the production efficiency to a certain extent.

As an optional technical solution of the embodiment of the present application, the pressing mechanism comprises a pressing member and a third driving mechanism, wherein the pressing member is used for pressing the first electrode sheet, the separator, or the second electrode sheet against the stacking platform; the third driving mechanism is connected to the pressing member and is used for driving the pressing member to move in the second direction and a third direction, the second direction is the stacking direction of the first electrode sheet, the separator, and the second electrode sheet, the third direction intersects the second direction, and the first direction intersects a plane in which the second direction and the third direction are located.

In the above technical solution, providing the third driving mechanism to drive the pressing member to move in the second direction and the third direction facilitates changing the position of the pressing member, and facilitates the pressing member to press the first electrode sheet, the separator, or the second electrode sheet. When the stacking platform is at the first stacking position or the second stacking position, the third driving mechanism may drive the pressing member to move, so that the pressing member is pressed against the uppermost one of the first electrode sheet, the separator, and the second electrode sheet.

As an optional technical solution of the embodiment of the present application, the pressing members are provided on both sides of the stacking platform in the first direction; and/or, the pressing members are provided on both sides of the stacking platform in the third direction.

In the above technical solution, providing the pressing members on both sides of the stacking platform in the first direction helps to improve the pressing effect on the first electrode sheet, the separator, or the second electrode sheet, further reduces the risk of the first electrode sheet, the separator, or the second electrode sheet being detached from the stacking platform, helps to improve the reliability of the stacking apparatus, helps to improve the stacking quality, reduces the shutdown risk, and improves the production efficiency to a certain extent. Providing the pressing members on both sides of the stacking platform in the third direction helps to improve the pressing effect on the first electrode sheet, the separator, or the second electrode sheet, further reduces the risk of the first electrode sheet, the separator, or the second electrode sheet being detached from the stacking platform, helps to improve the reliability of the stacking apparatus, helps to improve the stacking quality, reduces the shutdown risk, and ensures the production efficiency to a certain extent.

As an optional technical solution of the embodiment of the present application, the pressing member comprises a pressing part which is used for contacting the first electrode sheet, the separator, or the second electrode sheet and is sheet-shaped.

In the above technical solution, by setting the pressing part to be sheet-shaped, the thickness of the pressing part in the second direction is small, so that during the process of the stacking platform switching between the first stacking position and the second stacking position, the redundancy of the separator caused by the separator covering the pressing part is small. In addition, the pressing part is sheet-shaped, and the contact area between the pressing part and the first electrode sheet, the separator, or the second electrode sheet is large, which is not easy to cause stress concentration on the first electrode sheet, the separator, or the second electrode sheet, thereby helping to improve the stacking quality.

As an optional technical solution of the embodiment of the present application, the stacking device comprises a first transfer mechanism which is used for transferring the first electrode sheet to the stacking platform located at the first stacking position; and/or the stacking device comprises a second transfer mechanism which is used for transferring the second electrode sheet to the stacking platform located at the second stacking position.

In the above technical solution, by providing the first transfer mechanism, the first electrode sheet can be automatically transferred to the stacking platform located at the first stacking position, which is beneficial to improving the automation degree of the stacking device. Similarly, by providing the second transfer mechanism, the second electrode sheet can be automatically transferred to the stacking platform located at the second stacking position, which is beneficial to improving the automation degree of the stacking device.

In a second aspect, an embodiment of the present application further provides a stacking system, comprising the above stacking device and a gluing device, wherein the gluing device is used for gluing a battery made by the stacking device.

In a third aspect, an embodiment of the present application further provides a stacking method which is applicable to the above stacking apparatus, the stacking method comprising: providing a first electrode sheet; outputting, by the output part, a separator; providing a second electrode sheet; receiving, by the stacking platform, the first electrode sheet, the separator, and the second electrode sheet; and driving the output part and the stacking platform to move in opposite directions, so as to stack the first electrode sheet, the separator, and the second electrode sheet on the stacking platform.

As an optional technical solution of the embodiment of the present application, in the step of driving the output part and the stacking platform to move in opposite directions, the stacking method comprises driving the output part and the stacking platform to move in opposite directions, so as to stack the first electrode sheet, the separator, and the second electrode sheet on the stacking platform.

In the above technical solution, the output part and the stacking platform can move in opposite directions, so as to adjust the relative position of the output part and the stacking platform more quickly, so that the separator covers the first electrode sheet or the second electrode sheet more quickly, thereby reducing the movement time and stroke of the stacking platform, helping to shorten the stacking time, and improving the stacking efficiency.

As an optional technical solution of the embodiment of the present application, in the step of driving the output part and the stacking platform to move in opposite directions, the stacking method comprises: controlling the moving speed V₁ of the output part and the moving speed V₂ of the stacking platform, so that 0.8≤V₁/V₂≤1.2.

In the above technical solution, the ratio of the moving speed of the output part to the moving speed of the stacking platform is between 0.8 and 1.2, so that the moving speed of the output part is close to the moving speed of the stacking platform, and the pull on the separator is small, which is not easy to damage the separator and not easy to cause wrinkles on the separator.

As an optional technical solution of the embodiment of the present application, in the step of driving the output part and the stacking platform to move in opposite directions, the stacking method comprises: controlling the moving speed V₁ of the output part and the moving speed V₂ of the stacking platform, so that 0.9≤V₁/V₂≤1.1.

In the above technical solution, the ratio of the moving speed of the output part to the moving speed of the stacking platform is between 0.9 and 1.1, so that the moving speed of the output part is closer to the moving speed of the stacking platform, and the pull on the separator is smaller, which is not easier to damage the separator and not easier to cause wrinkles on the separator.

As an optional technical solution of the embodiment of the present application, in the step of driving the output part and the stacking platform to move in opposite directions, the stacking method comprises: controlling the moving speed V₁ of the output part and the moving speed V₂ of the stacking platform, so that V₁=V₂.

In the above technical solution, the moving speed of the output part is the same as the moving speed of the stacking platform, and the pull on the separator is smaller, which is not easier to damage the separator and not easier to cause wrinkles on the separator.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of a stacking device provided in some embodiments of the present application;
FIG. 2 is an enlarged diagram at position A in FIG. 1;
FIG. 3 is a schematic diagram of placing a first electrode sheet on a stacking platform provided in some embodiments of the present application;
FIG. 4 is a schematic structural diagram of a pressing mechanism provided in some embodiments of the present application;
FIG. 5 is a schematic diagram of a separator covering the first electrode sheet provided in some embodiments of the present application;
FIG. 6 is a schematic diagram of placing a second electrode sheet on the stacking platform provided in some embodiments of the present application;
FIG. 7 is a schematic diagram of the separator covering the second electrode sheet providing in some embodiments of the present application;
FIG. 8 is a schematic diagram of placing a second first electrode sheet on the stacking platform provided in some embodiments of the present application;
FIG. 9 is a schematic block diagram of the stacking device provided in some embodiments of the present application;
FIG. 10 is a schematic block diagram of a stacking system provided in some embodiments of the present application; and
FIG. 11 is a schematic block diagram of a stacking method provided in some embodiments of the present application.

Reference number: 10: stacking device; 11: separator unwinding mechanism; 111: output part; 1111: mounting base; 1112: roller set; 11121: first roller; 11122: second roller; 1113: cutter unit; 1114: first output position; 1115: second output position; 112: frame; 1121: first slide rail; 113: first driving mechanism; 114: unwinding roller; 115: passing roller; 12: stacking apparatus; 121: stacking platform; 1211: third slide rail; 122: base; 1221: second slide rail; 123: second driving mechanism; 124: pressing mechanism; 1241: pressing member; 12411: pressing part; 1242: third driving mechanism; 12421: first driving member; 12422: second driving member; 1243: connecting rod mechanism; 1244: first movable base; 1245: second movable base; 125: first stacking position; 1251: first sensor; 126: second stacking position; 1261: second sensor; 13: first transfer mechanism; 14: second transfer mechanism; 20: gluing device; 21: first electrode sheet; 22: second electrode sheet; 23: separator; 30: stacking system; 40: stacking method.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

In the present application, a battery cell may comprise a lithium-ion secondary battery cell, a lithium-ion primary battery cell, a lithium-sulfur battery cell, a sodium-lithium ion battery cell, a sodium-ion battery cell, a magnesium-ion battery cell, or the like, which is not limited in the embodiments of the present application. The battery cell may be in a shape of a cylinder, a flat body, a cuboid, or the like, which is not limited in the embodiments of the present application. The battery cell is generally classified into three types according to an encapsulating manner: a cylindrical battery cell, a square battery cell, and a pouch battery cell, which is not limited in the embodiments of the present application.

A battery mentioned in the embodiments of the present application refers to a single physical module including one or a plurality of battery cells to provide a higher voltage and capacity. For example, the battery mentioned in the present application may include a battery module, a battery pack, or the like. The battery generally includes a case for encapsulating one or more battery cells. The case can prevent liquids or other foreign objects from affecting the charging or discharging of the battery cells to a certain extent.

The battery cell comprises an electrode assembly and an electrolyte solution. The electrode assembly is composed of a positive electrode sheet, a negative electrode sheet, and a separator. Working of the battery cell mainly relies on migration of metal ions between the positive electrode sheet and the negative electrode sheet. The positive electrode sheet comprises a positive electrode current collector and a positive electrode active substance layer. The positive electrode active substance layer is coated on the surface of the positive electrode current collector. The positive electrode current collector not coated with the positive electrode active substance layer protrudes from the positive electrode current collector coated with the positive electrode active substance layer, and the positive electrode current collector not coated with the positive electrode active substance layer is a positive sub-tab. A lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode sheet comprises a negative electrode current collector and a negative electrode active substance layer. The negative electrode active substance layer is coated on the surface of the negative electrode current collector. The negative electrode current collector not coated with the negative electrode active substance layer protrudes from the negative electrode current collector coated with the negative electrode active substance layer, and the negative electrode current collector not coated with the negative electrode active substance layer is a negative sub-tab. The negative electrode current collector may be made of copper, and the negative electrode active substance may be carbon, silicon, or the like. To ensure that a large current passes through without any fusing, a plurality of positive sub-tabs are provided and stacked together, and a plurality of negative sub-tabs are provided and stacked together. The separator may be made of PP (polypropylene), PE (polyethylene), or the like.

At present, in view of the development of the market, the use of batteries is becoming increasingly more widespread. Batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of batteries continues to expand, a market demand for the batteries continues to increase.

An electrode assembly is a component in a battery cell in which an electrochemical reaction occurs. The electrode assembly comprises a wound electrode assembly or a stacked electrode assembly. At present, the production efficiency of the stacked electrode assembly is low.

In the prior art, the output part of the separator unwinding mechanism remain stationary, and the relative position of the stacking platform and the output part is adjusted by continuously reciprocating the stacking platform on the left and right sides of the output part, thereby covering the positive electrode sheet or the negative electrode sheet with the separator. During stacking, the stroke of the stacking platform is long, and the time required for movement is long, resulting in a low production efficiency of the stacked electrode assembly.

In view of this, an embodiment of the present application provides a stacking device, comprising a separator unwinding mechanism and a stacking apparatus. The separator unwinding mechanism is provided with an output part for outputting a separator. The stacking device comprises a stacking platform for receiving the separator. The stacking platform has a first stacking position and a second stacking position in a first direction. The stacking platform is used for receiving a first electrode sheet at the first stacking position, and the stacking platform is used for receiving a second electrode sheet at the second stacking position. The polarities of the first electrode sheet and the second electrode sheet are opposite. The output part has a first output position and a second output position in the first direction. The output part and the stacking platform can move in opposite directions. The output part is configured to switch between the second output position and the first output position when the stacking platform switches between the first stacking position and the second stacking position, so as to stack the first electrode sheet, the separator, and the second electrode sheet.

The output part of the stacking device can switch between the second output position and the first output position when the stacking platform switches between the first stacking position and the second stacking position, and the output part and the stacking platform can move in opposite directions, so as to enable the relative position of the output part and the stacking platform to be adjusted more quickly, so that the separator covers the first electrode sheet or the second electrode sheet more quickly, thereby reducing the movement time and stroke of the stacking platform, helping to shorten the stacking time, and improving the stacking efficiency. In addition, since the stroke of the stacking platform is short, the space required by the stacking platform when receiving the first electrode sheet and the second electrode sheet can be reduced, which helps to improve space utilization.

The technical solutions described in the embodiments of the present application are applicable to the manufacturing of a stacked electrode assembly, and the use of the stacking system helps to improve the production efficiency.

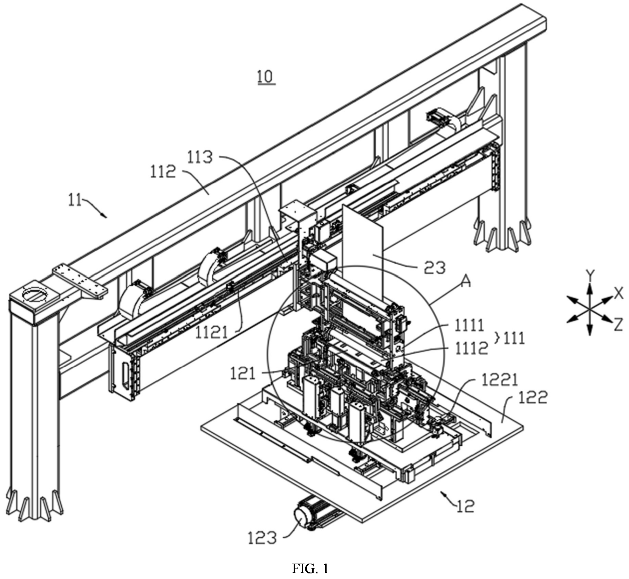

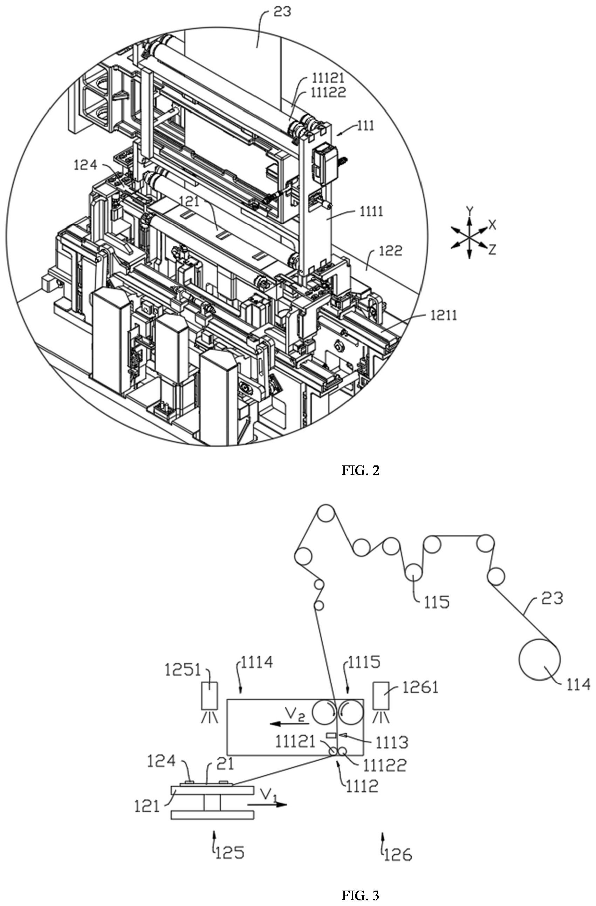

Referring to FIGS. 1, 2, and 3, FIG. 1 is a schematic structural diagram of a stacking device 10 provided in some embodiments of the present application. FIG. 2 is an enlarged diagram at position A in FIG. 1. FIG. 3 is a schematic diagram of placing a first electrode sheet 21 on a stacking platform 121 provided in some embodiments of the present application. An embodiment of the present application provides a stacking device 10, comprising a separator unwinding mechanism 11 and a stacking apparatus 12. The separator unwinding mechanism 11 is provided with an output part 111 for outputting a separator 23. The stacking apparatus 12 comprises a stacking platform 121 for receiving the separator 23. The stacking platform 121 has a first stacking position 125 and a second stacking position 126 in a first direction. The stacking platform 121 is used for receiving a first electrode sheet 21 at the first stacking position 125, and the stacking platform 121 is used for receiving a second electrode sheet 22 at the second stacking position 126. The polarities of the first electrode sheet 21 and the second electrode sheet 22 are opposite. Here, the output part 111 has a first output position 1114 and a second output position 1115 in the first direction, the output part 111 and the stacking platform 121 can move in opposite directions, and the output part 111 is configured to switch between the second output position 1115 and the first output position 1114 when the stacking platform 121 switches between the first stacking position 125 and the second stacking position 126, so as to stack the first electrode sheet 21, the separator 23, and the second electrode sheet 22.

Referring to FIGS. 1 and 2, the first direction may be the X direction shown in the figures.

The separator unwinding mechanism 11 is a mechanism for unwinding the separator 23 to the stacking apparatus 12. The separator 23 may be made of PP (polypropylene), PE (polyethylene), or the like.

The stacking apparatus 12 can receive the first electrode sheet 21, the separator 23 unwound by the separator unwinding mechanism 11, and the second electrode sheet 22, and stack the first electrode sheet 21, the separator 23, and the second electrode sheet 22 together to form a battery.

Here, the polarities of the first electrode sheet 21 and second electrode sheet 22 are opposite, that is, one of the first electrode sheet 21 and second electrode sheet 22 is a positive electrode sheet, and the other is a negative electrode sheet. When the first electrode sheet 21 is a positive electrode sheet, the second electrode sheet 22 is a negative electrode sheet. When the first electrode sheet 21 is a negative electrode sheet, the second electrode sheet 22 is a positive electrode sheet.

The output part 111 is a component of the separator unwinding mechanism 11 for outputting the separator 23. The separator unwinding mechanism 11 may comprise an unwinding roller 114, a plurality of passing rollers 115, and the output part 111. The unwinding roller 114 is used for mounting a separator material roll, and the separator 23 is wound around the plurality of passing rollers 115 and is output from the output part 111. In some embodiments, the first unwinding roller 114 can actively rotate under the drive of a driving mechanism, thereby achieving active unwinding.

The stacking platform 121 is a platform structure for receiving and supporting the first electrode sheet 21, the separator 23, and the second electrode sheet 22. The first electrode sheet 21, the separator 23, and the second electrode sheet 22 are gradually stacked on the stacking platform 121.

The output part 111 has a first output position 1114 and a second output position 1115 in the first direction, and the output unit 111 can switch between the first output position 1114 and the second output position 1115. The stacking platform 121 has a first stacking position 125 and a second stacking position 126 in the first direction. The stacking platform 121 receives the first electrode sheet 21 at the first stacking position 125 and receives the second electrode sheet 22 at the second stacking position 126. The stacking platform 121 can switch between the first stacking position 125 and the second stacking position 126. The output part 111 and the stacking platform 121 can move in opposite directions, so as to adjust the relative position of the output part 111 and the stacking platform 121 more quickly, so that the separator 23 covers the first electrode sheet 21 or the second electrode sheet 22 more quickly, thereby reducing the movement time and stroke of the stacking platform 121.

When the stacking platform 121 is located at the first stacking position 125, the output part 111 may be located at the second output position 1115. When the stacking platform 121 is located at the second stacking position 126, the output part 111 may be located at the first output position 1114. When the stacking platform 121 moves from the first stacking position 125 to the second stacking position 126, the output part 111 can move from the second output position 1115 to the first output position 1114, so that the output part 111 and the stacking platform 121 meet earlier, and the separator covers the first electrode sheet 21 or the second electrode sheet 22 more quickly. When the stacking platform 121 moves from the second stacking position 126 to the first stacking position 125, the output part 111 can move from the first output position 1114 to the second output position 1115, so that the output part 111 and the stacking platform 121 meet earlier, and the separator 23 covers the first electrode sheet 21 or the second electrode sheet 22 more quickly.

The output part 111 of the stacking device 10 can switch between the second output position 1115 and the first output position 1114 when the stacking platform 121 switches between the first stacking position 125 and the second stacking position 126, and the output part 111 and the stacking platform 121 can move in opposite directions, so as to enable the relative position of the output part 111 and the stacking platform 121 to be adjusted more quickly, so that the separator 23 covers the first electrode sheet 21 or the second electrode sheet 22 more quickly, thereby reducing the movement time and stroke of the stacking platform 121, helping to shorten the stacking time, and improving the stacking efficiency. Moreover, since the stroke of the stacking platform 121 is short, the space required by the stacking platform 121 when receiving the first electrode sheet 21 and the second electrode sheet 22 can be reduced, which helps to improve space utilization.

Referring to FIGS. 1, 2, and 3, in some embodiments, in order to facilitate detecting whether the stacking platform 121 reaches the first stacking position 125 and the second stacking position 126, a first sensor 1251 is provided at the first stacking position 125, and a second sensor 1261 is provided at the second stacking position 126. The first sensor 1251 and the second sensor 1261 may be in-place sensors, industrial cameras, etc.

Referring to FIGS. 1, 2, and 3, in some embodiments, the separator unwinding mechanism 11 comprises a frame 112, and the output part 111 is movably disposed on the frame 112 in the first direction. The output part 111 is configured to be movable relative to the frame 112 in the first direction so as to switch between the first output position 1114 and the second output position 1115.

The frame 112 is the mounting basis of the separator unwinding mechanism 11. The output part 111 is movably disposed on the frame 112 in the first direction, and the output part 111 can switch between the first output position 1114 and the second output position 1115 in a moving manner.

Optionally, the frame 112 is provided with a first slide rail 1121 thereon, which extends in the first direction. The output part 111 is in slide fit with the first slide rail 1121.

The output part 111 is movably disposed on the frame 112 in the first direction, and the output part 111 can switch between the first output position 1114 and the second output position 1115 in a moving manner, which facilitates the control of the moving speed of the output part 111. When the output part 111 moves, the pull on the separator 23 is small, which is not easy to damage the separator 23 and not easy to cause wrinkles on the separator 23.

In some other embodiments, the output part 111 is configured to switch between the first output position 1114 and the second output position 1115 in a swinging manner.

Referring to FIGS. 1, 2, and 3, in some embodiments, the separator unwinding mechanism 11 comprises a first driving mechanism 113 which is connected to the output part 111 and is used for driving the output part 111 to move in the first direction, so that the output part 111 switches between the first output position 1114 and the second output position 1115.

The first driving mechanism 113 is connected to the output part 111, and is used for driving the output part 111 to move in the first direction, so as to realize the switching of the output part 111 between the first output position 1114 and the second output position 1115. The first driving mechanism 113 may comprise a linear driving member, an output end of the linear driving member is connected to the output part 111, and the linear driving member drives the output part 111 to move in the first direction. The linear driving member may be a linear air cylinder, a linear electric cylinder, a linear oil cylinder, or the like. The first driving mechanism 113 may also comprise a rotary driving member and a transmission mechanism. The rotary driving member is connected to the output part 111 through the transmission mechanism. The rotary driving member outputs a rotary motion, and the transmission mechanism converts the rotary motion output by the rotary driving member into a linear motion of the output part 111. The rotary driving member may be a motor, an internal combustion engine, or the like. The transmission mechanism may be a crank slider mechanism, a lead screw nut mechanism, or the like.

Providing the first driving mechanism 113 to drive the output part 111 to move is not only beneficial to controlling the moving speed of the output part 111, but also beneficial to improving the automation degree of the stacking device 10.

Referring to FIGS. 1, 2, and 3, in some embodiments, the output part 111 comprises a mounting base 1111 and a roller set 1112 disposed on the mounting base 1111, wherein the roller set 1112 comprises a first roller 11121 and a second roller 11122, the first roller 11121 and the second roller 11122 are arranged in the first direction, and a gap for the separator 23 to pass through is formed between the first roller 11121 and the second roller 11122.

The mounting base 1111 is the mounting basis of the roller set 1112. The mounting base 1111 is in slide fit with the first slide rail 1121.

The first roller 11121 and the second roller 11122 are both of a roller structure, and the first roller 11121 and the second roller 11122 are both rotatably disposed on the mounting base 1111. The first roller 11121 and the second roller 11122 are spaced apart in the first direction, and the separator 23 can pass through the gap between the first roller 11121 and the second roller 11122 to realize the output of the separator 23.

The first roller 11121 and the second roller 11122 may be driven by respectively providing a driving member, at which point both the first roller 11121 and the second roller 11122 are active rollers capable of actively rotating. The first roller 11121 and the second roller 11122 may also be driven without providing a driving member, at which point both the first roller 11121 and the second roller 11122 are driven rollers that cannot rotate actively.

By providing the first roller 11121 and the second roller 11122 to jointly output the separator 23, when the stacking platform 121 is at the first stacking position 125, the separator 23 can be wound around the first roller 11121, and when the stacking platform 121 is at the second stacking position 126, the separator 23 can be wound around the second roller 11122, so that the roller set 1112 can support the separator 23 regardless of the position of the stacking platform 121, thereby facilitating the output of the separator 23. In addition, the first roller 11121 and the second roller 11122 can also play a role in smoothing the separator 23 to a certain extent, thereby reducing the risk of wrinkling of the separator 23.

Referring to FIGS. 1, 2, and 3, in some embodiments, the output part 111 comprises a plurality of roller sets 1112 which are arranged in a second direction. The second direction is a stacking direction of the first electrode sheet 21, the separator 23, and the second electrode sheet 22.

The second direction is a stacking direction of the first electrode sheet 21, the separator 23, and the second electrode sheet 22. Referring to FIGS. 1 and 2, the second direction may be the Y direction shown in the figures.

The output part 111 comprises a plurality of roller sets 1112 which are spaced apart in the second direction. The separator 23 sequentially passes through the plurality of roller sets 1112 and is output from the output part 111.

The plurality of roller sets 1112 may all be active roller sets that can actively rotate, or may all be driven roller sets that cannot actively rotate, or some roller sets 1112 are active roller sets and the other roller sets 1112 are driven roller sets.

By providing a plurality of roller sets 1112 and arranging the plurality of roller sets 1112 in the second direction, each roller set 1112 can play a role in smoothing the separator 23 to a certain extent, thereby reducing the risk of wrinkling of the separator 23.

Referring to FIGS. 1, 2, and 3, in some embodiments, the stacking apparatus 12 comprises a base 122, and the stacking platform 121 is movably disposed on the base 122 in the first direction. The stacking platform 121 is configured to be movable relative to the base 122 in a first direction so as to switch between the first stacking position 125 and the second stacking position 126.

The base 122 is the mounting basis of the stacking apparatus 12. The stacking platform 121 is movably disposed on the base 122 in the first direction, and the stacking platform 121 can switch between the first stacking position 125 and the second stacking position 126 in a moving manner.

Optionally, the base 122 is provided with a second slide rail 1221 thereon, which extends in the first direction. The stacking platform 121 is in slide fit with the second slide rail 1221.

The stacking platform 121 is movably disposed on the base 122 in the first direction, and the stacking platform 121 can switch between the first stacking position 125 and the second stacking position 126 in a moving manner, which facilitates the control of the moving speed of the stacking platform 121. When the stacking platform 121 moves, the pull on the separator 23 is small, which is not easy to damage the separator 23 and not easy to cause wrinkles on the separator 23. In addition, when the stacking platform 121 moves between the first stacking position 125 and the second stacking position 126, the separator 23 can better cover the first electrode sheet 21 or the second electrode sheet 22, thereby improving the stacking quality.

Referring to FIGS. 1, 2, and 3, in some embodiments, the stacking apparatus 12 comprises a second driving mechanism 123 which is connected to the stacking platform 121 and is used for driving the stacking platform 121 to move in the first direction, so that the stacking platform 121 switches between the first stacking position 125 and the second stacking position 126.

The second driving mechanism 123 is connected to the stacking platform 121 and is used for driving the stacking platform 121 to move in the first direction, so as to achieve the switching of the stacking platform 121 between the first stacking position 125 and the second stacking position 126. The second driving mechanism 123 may comprise a linear driving member, an output end of the linear driving member is connected to the stacking platform 121, and the linear driving member drives the stacking platform 121 to move in the first direction. The linear driving member may be a linear air cylinder, a linear electric cylinder, a linear oil cylinder, or the like. The second driving mechanism 123 may also comprise a rotary driving member and a transmission mechanism. The rotary driving member is connected to the stacking platform 121 through the transmission mechanism. The rotary driving member outputs a rotary motion, and the transmission mechanism converts the rotary motion output by the rotary driving member into a linear motion of the stacking platform 121. The rotary driving member may be a motor, an internal combustion engine, or the like. The transmission mechanism may be a crank slider mechanism, a lead screw nut mechanism, or the like.

Providing the second driving mechanism 123 to drive the stacking platform 121 to move is not only beneficial to controlling the moving speed of the stacking platform 121, but also beneficial to improving the automation degree of the stacking device 10.

Referring to FIGS. 1, 2, and 3, in some embodiments, the output part 111 is configured to be movable in the first direction so as to switch between the first output position 1114 and the second output position 1115, and a movement direction of the output part 111 is opposite to a movement direction of the stacking platform 121.

The output part 111 and the stacking platform 121 can move in opposite directions, so as to adjust the relative position of the output part 111 and the stacking platform 121 more quickly, so that the separator 23 covers the first electrode sheet 21 or the second electrode sheet 22 more quickly, thereby reducing the movement time and stroke of the stacking platform 121, helping to shorten the stacking time, and improving the stacking efficiency.

In some embodiments, the moving speed of the output part 111 is V₁, and the moving speed of the stacking platform 121 is V₂, satisfying: 0.8≤V₁/V₂≤1.2.

V₁ represents the moving speed of the output part 111. V₂ represents the moving speed of the stacking platform 121. The ratio of the moving speed of the output part 111 to the moving speed of the stacking platform 121 is between 0.8 and 1.2.

The ratio of the moving speed of the output part 111 to the moving speed of the stacking platform 121 may be: V₁/V₂=0.8, 0.82, 0.85, 0.88, 0.9, 0.92, 0.95, 0.98, 1, 1.02, 1.05, 1.08, 1.1, 1.12, 1.15, 1.18, 1.2, etc.

The ratio of the moving speed of the output part 111 to the moving speed of the stacking platform 121 is between 0.8 and 1.2, so that the moving speed of the output part 111 is close to the moving speed of the stacking platform 121, and the pull on the separator 23 is small, which is not easy to damage the separator 23 and not easy to cause wrinkles on the separator 23.

In some embodiments, 0.9≤V₁/V₂≤1.1.

The ratio of the moving speed of the output part 111 to the moving speed of the stacking platform 121 may be: V₁/V₂=0.9, 0.91, 0.92, 0.93, 0.94, 0.95, 0.96, 0.97, 0.98, 0.99, 1, 1.01, 1.02, 1.03, 1.04, 1.05, 1.06, 1.07, 1.08, 1.09, 1.1, etc.

The ratio of the moving speed of the output part 111 to the moving speed of the stacking platform 121 is between 0.9 and 1.1, so that the moving speed of the output part 111 is closer to the moving speed of the stacking platform 121, and the pull on the separator 23 is smaller, which is not easier to damage the separator 23 and not easier to cause wrinkles on the separator 23.

Optionally, V₁=V₂.

The moving speed of the output part 111 is equal to the moving speed of the stacking platform 121, that is, the ratio of the moving speed of the output part 111 to the moving speed of the stacking platform 121 is 1.

The moving speed of the output part 111 is the same as the moving speed of the stacking platform 121, and the pull on the separator 23 is smaller, which is not easier to damage the separator 23 and not easier to cause wrinkles on the separator 23.

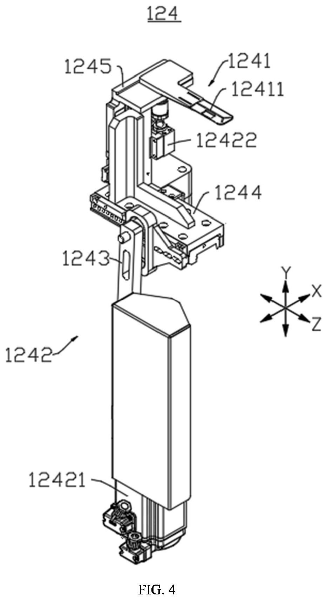

Referring to FIGS. 1, 2, and 4, FIG. 4 is a schematic structural diagram of a pressing mechanism 124 provided in some embodiments of the present application. In some embodiments, the stacking apparatus 12 comprises a pressing mechanism 124 which is disposed on the stacking platform 121 and is used for pressing the first electrode sheet 21, the separator 23, or the second electrode sheet 22 against the stacking platform 121.

The pressing mechanism 124 is a mechanism for pressing the first electrode sheet 21, the separator 23, or the second electrode sheet 22 against the stacking platform 121. The pressing mechanism 124 may press the outermost one of the first electrode sheet 21, the separator 23, and the second electrode sheet 22 so as to press the underlying first electrode sheet 21, the separator 23, and the second electrode sheet 22. For example, when the stacking platform 121 is at the first stacking position 125, the pressing mechanism 124 may be in contact with the uppermost first electrode sheet 21, so as to press the stacked first electrode sheet 21, the separator 23, and the second electrode sheet 22. For another example, when the stacking platform 121 is at the second stacking position 126, the pressing mechanism 124 may be in contact with the uppermost second electrode sheet 22, so as to press the stacked first electrode sheet 21, the separator 23, and the second electrode sheet 22.

By providing the pressing mechanism 124, the first electrode sheet 21, the separator 23, or the second electrode sheet 22 is pressed against the stacking platform 121 during the process of the stacking platform 121 switching between the first stacking position 125 and the second stacking position 126, which reduces the risk of the first electrode sheet 21, the separator 23, or the second electrode sheet 22 being detached from the stacking platform 121, helps to improve the reliability of the stacking device 10, helps to improve the stacking quality, reduces the shutdown risk, and improves the production efficiency to a certain extent.

Referring to FIGS 1, 2, and 4, in some embodiments, the pressing mechanism 124 comprises a pressing member 1241 and a third driving mechanism 1242. The pressing member 1241 is used for pressing the first electrode sheet 21, the separator 23, or the second electrode sheet 22 against the stacking platform 121. The third driving mechanism 1242 is connected to the pressing member 1241, and is used for driving the pressing member 1241 to move in the second direction and a third direction. The second direction is the stacking direction of the first electrode sheet 21, the separator 23, and the second electrode sheet 22, the third direction intersects the second direction, and the first direction intersects a plane in which the second direction and the third direction are located.

The second direction is the stacking direction of the first electrode sheet 21, the separator 23, and the second electrode sheet 22. The third direction intersects the second direction. Referring to FIGS. 1, 2, and 4, the second direction may be the Y direction shown in the figures, and the third direction may be the Z direction shown in the figures. At this time, the first direction, the second direction Y, and the third direction are perpendicular to each other.

The pressing member 1241 is a component for contacting the first electrode sheet 21, the separator 23, or the second electrode sheet 22 to press the first electrode sheet 21, the separator 23, or the second electrode sheet 22 against the stacking platform 121. When the pressing member 1241 is in operation, the pressing member 1241 is in contact with the first electrode sheet 21, the separator 23, or the second electrode sheet 22, and in the second direction, a projection of the pressing member 1241 on the stacking platform 121 at least partially overlaps with the stacking platform 121. When the pressing member 1241 is not in operation, the pressing member 1241 avoids the first electrode sheet 21, the separator 23, and the second electrode sheet 22, so as to continue stacking the first electrode sheet 21 or the second electrode sheet 22.

The third driving mechanism 1242 is connected to the pressing member 1241, and the third driving mechanism 1242 can drive the pressing member 1241 to move in the second direction and the third direction, so as to change the pressing position of the pressing member 1241.

Referring to FIGS. 1, 2, and 4, in some embodiments, the third driving mechanism 1242 comprises a first driving member 12421, a second driving member 12422, a connecting rod mechanism 1243, a first movable base 1244, and a second movable base 1245. The stacking platform 121 is provided with a third slide rail 1211 thereon, which extends in the third direction. The first movable base 1244 is in slide fit with the third slide rail 1211, the first driving member 12421 is connected to the stacking platform 121, and the connecting rod mechanism 1243 is connected to the first driving member 12421 and the first movable base 1244. The first driving member 12421 drives the first movable member to move in the third direction through the connecting rod mechanism 1243. The second movable base 1245 is movably connected to the first movable base 1244 in the second direction. The second driving member 12422 is mounted on the first movable base 1244, and an output end of the second driving member 12422 is connected to the second movable base 1245. The second driving member 12422 is used for driving the second movable base 1245 to move in the second direction. The pressing member 1241 is mounted on the second movable base 1245. The first driving member 12421 and the second driving member 12422 may be linear electric cylinders, linear air cylinders, linear oil cylinders, or the like.

Providing the third driving mechanism 1242 to drive the pressing member 1241 to move in the second direction and the third direction facilitates changing the position of the pressing member 1241, and facilitates the pressing member 1241 to press the first electrode sheet 21, the separator 23, or the second electrode sheet 22. When the stacking platform 123 is at the first stacking position 125 or the second stacking position 126, the third driving mechanism 1242 may drive the pressing member 1241 to move, so that the pressing member 1241 is pressed against the uppermost one of the first electrode sheet 21, the separator 23, and the second electrode sheet 22.

Referring to FIGS. 1, 2, and 4, in some embodiments, the pressing members 1241 are provided on both sides of the stacking platform 121 in the first direction. And/or, the pressing members 1241 are provided on both sides of the stacking platform 121 in the third direction.

The stacking mechanism comprises a plurality of pressing mechanisms 124. Some of the plurality of pressing mechanisms 124 are located on one side of the stacking platform 121 in the first direction, and some are located on the other side of the stacking platform 121 in the first direction. In this way, the pressing members 1241 are provided on both sides of the stacking platform 121 in the first direction.

The stacking mechanism comprises a plurality of pressing mechanisms 124. Some of the plurality of pressing mechanisms 124 are located on one side of the stacking platform 121 in the third direction, and some are located on the other side of the stacking platform 121 in the third direction. In this way, the pressing members 1241 are provided on both sides of the stacking platform 121 in the third direction.

Providing the pressing members 1241 on both sides of the stacking platform 121 in the first direction helps to improve the pressing effect on the first electrode sheet 21, the separator 23, or the second electrode sheet 22, further reduces the risk of the first electrode sheet 21, the separator 23, or the second electrode sheet 22 being detached from the stacking platform 121, helps to improve the reliability of the stacking apparatus 12, helps to improve the stacking quality, reduces the shutdown risk, and improves the production efficiency to a certain extent. Providing the pressing members 1241 on both sides of the stacking platform 121 in the third direction helps to improve the pressing effect on the first electrode sheet 21, the separator 23, or the second electrode sheet 22, further reduces the risk of the first electrode sheet 21, the separator 23, or the second electrode sheet 22 being detached from the stacking platform 121, helps to improve the reliability of the stacking apparatus 12, helps to improve the stacking quality, reduces the shutdown risk, and ensures the production efficiency to a certain extent.

Referring to FIGS. 1, 2, and 4, in some embodiments, the pressing member 1241 comprises a pressing part 12411 which is used for contacting the first electrode sheet 21, the separator 23, or the second electrode sheet 22 and is sheet-shaped.

The pressing part 12411 is a portion of the pressing member 1241 which is in contact with the first electrode sheet 21, the separator 23, or the second electrode sheet 22. The pressing part 12411 is sheet-shaped. The thickness of the pressing part 12411 is much smaller than the length and width thereof. For example, the thickness of the pressing part 12411 is less than 20% of the width thereof, and the thickness of the pressing part 12411 is less than 20% of the length thereof.

By setting the pressing part 12411 to be sheet-shaped, the thickness of the pressing part 12411 in the second direction is small, so that during the process of the stacking platform 121 switching between the first stacking position 125 and the second stacking position 126, the redundancy of the separator 23 caused by the separator 23 covering the pressing part 12411 is small. In addition, the pressing part 12411 is sheet-shaped, and the contact area between the pressing part 12411 and the first electrode sheet 21, the separator 23, or the second electrode sheet 22 is large, which is not easy to cause stress concentration on the first electrode sheet 21, the separator 23, or the second electrode sheet 22, thereby helping to improve the stacking quality.

Referring to FIGS. 1, 2, and 3 again, in some embodiments, the separator unwinding mechanism 11 comprises a cutter unit 1113 which is used for cutting off the separator 23.

The cutter unit 1113 may comprise a cutter and a supporting member opposite to the cutter, and the separator 23 passes between the cutter and the supporting member. When the separator 23 needs to be cut off, the cutter moves toward the supporting member to cut off the separator 23.

By providing the cutter unit 1113, after the first electrode sheet 21, the separator 23, and the second electrode sheet 22 are stacked, the separator 23 is cut off so as to prepare for the stacking of the next battery.

Referring to FIG. 3, when the stacking platform 121 is at the first stacking position 125, the first electrode sheet 21 may be placed on the stacking platform 121, one end of the separator 23 is placed below the first electrode sheet 21, and the first electrode sheet 21 is pressed against the stacking platform 121 by the pressing mechanism 124.

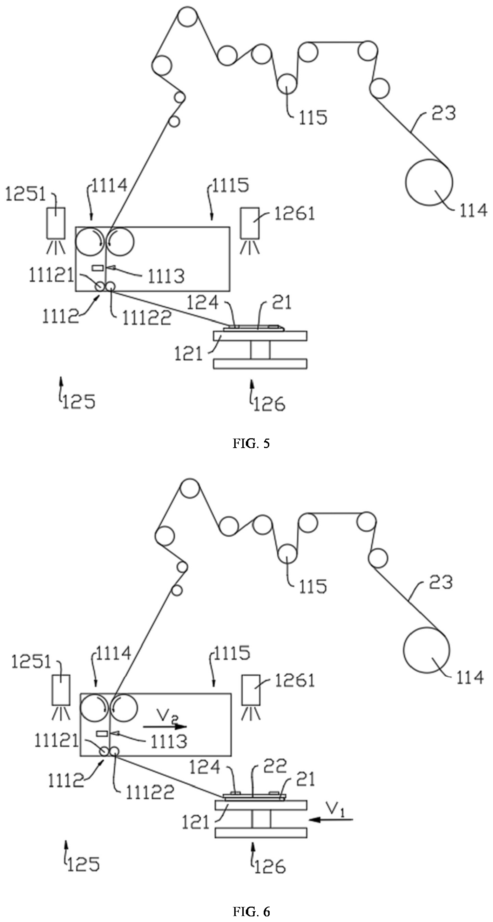

Referring to FIG. 5, FIG. 5 is a schematic diagram of the separator 23 covering the first electrode sheet 21 provided in some embodiments of the present application. The first driving mechanism 113 drives the output part 111 to move from the second output position 1115 to the first output position 1114, and the second driving mechanism 123 drives the stacking platform 121 to move from the first stacking position 125 to the second stacking position 126. During this process, in the first direction, the output part 111 and the stacking platform 121 first meet and then depart from each other, and the separator 23 gradually covers the first electrode sheet 21.

Referring to FIG. 6, FIG. 6 is a schematic diagram of placing the second electrode sheet 22 on the stacking platform 121 provided in some embodiments of the present application. After the stacking platform 121 reaches the second stacking position 126, the third driving mechanism 1242 drives the pressing member 1241 to act to release the first electrode sheet 21, so as to place the second electrode sheet 22 on the first electrode sheet 21, at which point a layer of separator 23 is provided between the second electrode sheet 22 and the first electrode sheet 21. The second driving mechanism 123 acts again to press the second electrode sheet 22 against the stacking platform 121.

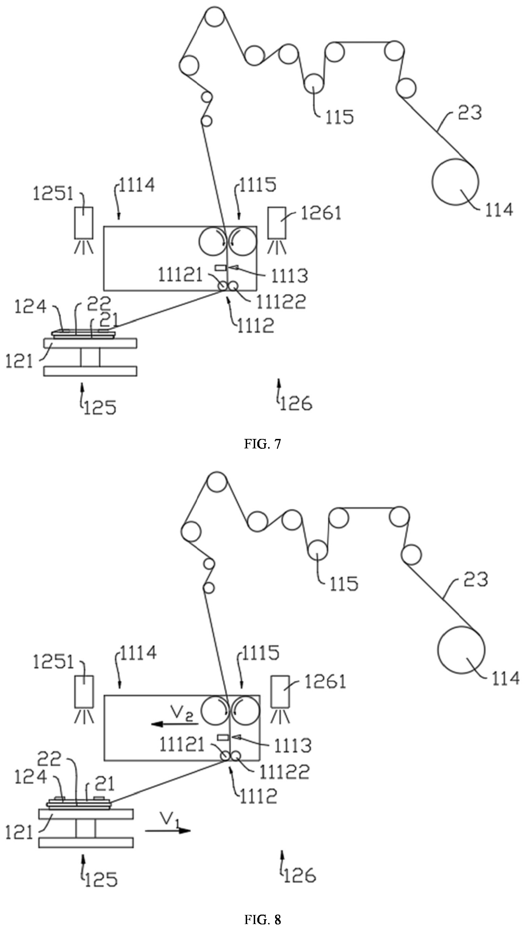

Referring to FIG. 7, FIG. 7 is a schematic diagram of the separator 23 covering the second electrode sheet 22 provided in some embodiments of the present application. The first driving mechanism 113 drives the output part 111 to move from the first output position 1114 to the second output position 1115, and the second driving mechanism 123 drives the stacking platform 121 to move from the second stacking position 126 to the first stacking position 125. During this process, in the first direction, the output part 111 and the stacking platform 121 first meet and then depart from each other, and the separator 23 gradually covers the second electrode sheet 22.

Referring to FIG. 8, FIG. 8 is a schematic diagram of placing a second first electrode sheet 21 on the stacking platform 121 provided in some embodiments of the present application. When the stacking platform 121 returns to the first stacking position 125, the third driving mechanism 1242 drives the pressing member 1241 to act to release the second electrode sheet 22, so as to place a new first electrode sheet 21 on the second electrode sheet 22, at which point a layer of separator 23 is provided between the new first electrode sheet 21 and the second electrode sheet 22. The third driving mechanism 1242 acts again to press the new first electrode sheet 21 against the stacking platform 121.

The above process is repeated to complete the stacking.

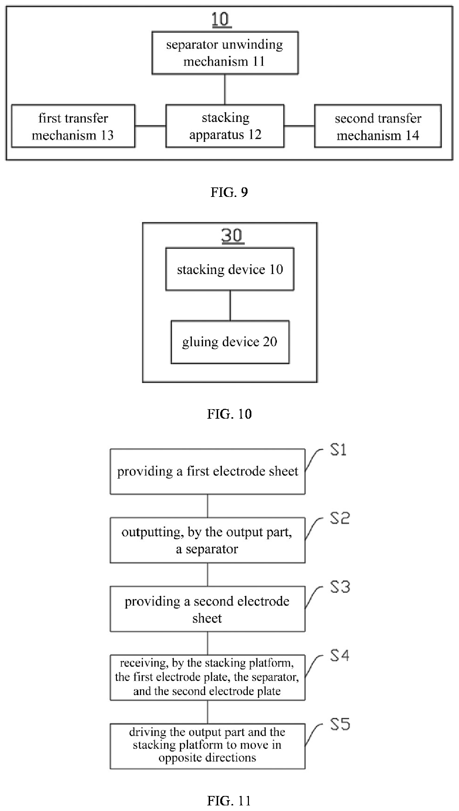

Referring to FIG. 9, FIG. 9 is a schematic block diagram of the stacking device 10 provided in some embodiments of the present application. In some embodiments, a first transfer mechanism 13 is used for transferring the first electrode sheet 21 to the stacking platform 121 located at the first stacking position 125. And/or the stacking device 10 comprises a second transfer mechanism 14 which is used for transferring the second electrode sheet 22 to the stacking platform 121 located at the second stacking position 126.

The first transfer mechanism 13 is a mechanism for transferring the first electrode sheet 21 to the stacking apparatus 12. The first transfer mechanism 13 may comprise a two-axis manipulator, a three-axis manipulator, a four-axis manipulator, or the like.

The second transfer mechanism 14 is a mechanism for transferring the second electrode sheet 22 to the stacking apparatus 12. The second transfer mechanism 14 may comprise a two-axis manipulator, a three-axis manipulator, a four-axis manipulator, or the like.

By providing the first transfer mechanism 13, the first electrode sheet 21 can be automatically transferred to the stacking platform 121 located at the first stacking position 125, which is beneficial to improving the automation degree of the stacking device 10. Similarly, by providing the second transfer mechanism 14, the second electrode sheet 22 can be automatically transferred to the stacking platform 121 located at the second stacking position 126, which is beneficial to improving the automation degree of the stacking device 10.

Referring to FIG. 10, FIG. 10 is a schematic block diagram of a stacking system 30 provided in some embodiments of the present application. An embodiment of the present application further provides a stacking system 30, comprising the stacking device 10 described above and a gluing device 20, wherein the gluing device 20 is used for gluing a battery made by the stacking device 10.

Referring to FIG. 11, FIG. 11 is a schematic block diagram of a stacking method provided in some embodiments of the present application. An embodiment of the present application further provides a stacking method 40, which is applicable to the stacking apparatus described above, the stacking method 40 comprising:
step S1: providing a first electrode sheet 21;
step S2: outputting, by the output part 111, a separator 23;
step S3: providing a second electrode sheet 22;
step S4: receiving, by the stacking platform 121, the first electrode sheet 21, the separator 23, and the second electrode sheet 22; and
step S5: driving the output part 111 and the stacking platform 121 to move in opposite directions, so as to stack the first electrode sheet 21, the separator 23, and the second electrode sheet 22.

In some embodiments, in the step of driving the output part 111 and the stacking platform 121 to move in opposite directions, the stacking method 40 comprises driving the output part 111 and the stacking platform 121 to move in opposite directions so as to stack the first electrode sheet 21, the separator 23, and the second electrode sheet 22.

In step S5, driving the output part 111 and the stacking platform 121 to move in opposite directions is specifically driving the output part 111 and the stacking platform 121 to move in reverse.

The output part 111 and the stacking platform 121 can move in opposite directions, so as to adjust the relative position of the output part 111 and the stacking platform 121 more quickly, so that the separator 23 covers the first electrode sheet 21 or the second electrode sheet 22 more quickly, thereby reducing the movement time and stroke of the stacking platform 121, helping to shorten the stacking time, and improving the stacking efficiency.

In some embodiments, in the step of driving the output part 111 and the stacking platform 121 to move in the opposite directions, the stacking method 40 comprises: controlling the moving speed V₁ of the output part 111 and the moving speed V₂ of the stacking platform 121, so that 0.8≤V₁/V₂≤1.2.

The ratio of the moving speed of the output part 111 to the moving speed of the stacking platform 121 is between 0.8 and 1.2, so that the moving speed of the output part 111 is close to the moving speed of the stacking platform 121, and the pull on the separator 23 is small, which is not easy to damage the separator 23 and not easy to cause wrinkles on the separator 23.

In some embodiments, in the step of driving the output part 111 and the stacking platform 121 to move in the opposite directions, the stacking method 40 comprises: controlling the moving speed V₁ of the output part 111 and the moving speed V₂ of the stacking platform 121, so that 0.9≤V₁/V₂≤1.1.

The ratio of the moving speed of the output part 111 to the moving speed of the stacking platform 121 is between 0.9 and 1.1, so that the moving speed of the output part 111 is closer to the moving speed of the stacking platform 121, and the pull on the separator 23 is smaller, which is not easier to damage the separator 23 and not easier to cause wrinkles on the separator 23.

Optionally, in the step of driving the output part 111 and the stacking platform 121 to move in opposite directions, the stacking method 40 comprises: controlling the moving speed V₁ of the output part 111 and the moving speed V₂ of the stacking platform 121, so that V₁=V₂.

The moving speed of the output part 111 is the same as the moving speed of the stacking platform 121, and the pull on the separator 23 is smaller, which is not easier to damage the separator 23 and not easier to cause wrinkles on the separator 23.

According to some embodiments of the present application, reference is made to FIGS. 1-8.

An embodiment of the present application provides a stacking device 10, comprising a separator unwinding mechanism 11 and a stacking apparatus 12. The separator unwinding mechanism 11 is provided with an output part 111 for outputting a separator 23. The stacking apparatus 12 comprises a stacking platform 121 for receiving the separator 23. The stacking platform 121 has a first stacking position 125 and a second stacking position 126 in a first direction. The stacking platform 121 is used for receiving a first electrode sheet 21 at the first stacking position 125, and the stacking platform 121 is used for receiving a second electrode sheet 22 at the second stacking position 126. The polarities of the first electrode sheet 21 and the second electrode sheet 22 are opposite. Here, the output part 111 has a first output position 1114 and a second output position 1115 in the first direction, the output part 111 and the stacking platform 121 can move in opposite directions, and the output part 111 is configured to switch between the second output position 1115 and the first output position 1114 when the stacking platform 121 switches between the first stacking position 125 and the second stacking position 126, so as to stack the first electrode sheet 21, the separator 23, and the second electrode sheet 22. The output part 111 of the stacking device 10 can switch between the second output position 1115 and the first output position 1114 when the stacking platform 121 switches between the first stacking position 125 and the second stacking position 126, and the output part 111 and the stacking platform 121 can move in opposite directions, so as to enable the relative position of the output part 111 and the stacking platform 121 to be adjusted more quickly, so that the separator 23 covers the first electrode sheet 21 or the second electrode sheet 22 more quickly, thereby reducing the movement time and stroke of the stacking platform 121, helping to shorten the stacking time, and improving the stacking efficiency. Moreover, since the stroke of the stacking platform 121 is short, the space required by the stacking platform 121 when receiving the first electrode sheet 21 and the second electrode sheet 22 can be reduced, which helps to improve space utilization.

The separator unwinding mechanism 11 comprises a frame 112 and a first driving mechanism 113. The output part 111 is movably disposed on the frame 112 in the first direction. The first driving mechanism 113 is connected to the output part 111, and is used for driving the output part 111 to move in the first direction, so that the output part 111 switches between the first output position 1114 and the second output position 1115. The output part 111 is movably disposed on the frame 112 in the first direction, and the output part 111 can switch between the first output position 1114 and the second output position 1115 in a moving manner, which facilitates the control of the moving speed of the output part 111. When the output part 111 moves, the pull on the separator 23 is small, which is not easy to damage the separator 23 and not easy to cause wrinkles on the separator 23. Providing the first driving mechanism 113 to drive the output part 111 to move is not only beneficial to controlling the moving speed of the output part 111, but also beneficial to improving the automation degree of the stacking device 10.

The stacking platform 121 is configured to be movable in the first direction so as to switch between the first stacking position 125 and the second stacking position 126, and a movement direction of the output part 111 is opposite to a movement direction of the stacking platform 121. The output part 111 and the stacking platform 121 can move in opposite directions, so as to adjust the relative position of the output part 111 and the stacking platform 121 more quickly, so that the separator 23 covers the first electrode sheet 21 or the second electrode sheet 22 more quickly, thereby reducing the movement time and stroke of the stacking platform 121, helping to shorten the stacking time, and improving the stacking efficiency.

The moving speed of the output part 111 is V₁, and the moving speed of the stacking platform 121 is V₂, satisfying: V₁=V₂. The moving speed of the output part 111 is the same as the moving speed of the stacking platform 121, and the pull on the separator 23 is smaller, which is not easier to damage the separator 23 and not easier to cause wrinkles on the separator 23.

An embodiment of the present application further provides a stacking method 40, comprising: step S1: outputting, by the output part 111, the separator 23, wherein the output part 111 has a first output position 1114 and a second output position 1115 in the first direction; step S2: receiving, by the stacking platform 121, the separator 23, wherein the stacking platform 121 has a first stacking position 125 and a second stacking position 126 in the first direction, the stacking platform 121 receives the first electrode sheet 21 at the first stacking position 125, the stacking platform 121 receives the second electrode sheet 22 at the second stacking position 126, and the polarities of the first electrode sheet 21 and the second electrode sheet 22 are opposite; and step S3: driving the output part 111 and the stacking platform 121 to move in opposite directions, so that when the stacking platform 121 switches between the first stacking position 125 and the second stacking position 126, the output part 111 switches between the second output position 1115 and the first output position 1114, so as to stack the first electrode sheet 21, the separator 23, and the second electrode sheet 22.

The foregoing descriptions are merely preferred embodiments of the present application, and are not intended to limit the present application. For a person skilled in the art, various modifications and changes may be made in the present application. Any modification, equivalent replacement, or improvement made without departing from the spirit and principle of the present application shall fall within the protection scope of the present application.

## Claims

1. A stacking device, comprising:
a separator unwinding mechanism provided with an output part for outputting a separator; and
a stacking apparatus, wherein the stacking apparatus comprises a stacking platform for receiving the separator, the stacking platform has a first stacking position and a second stacking position in a first direction, the stacking platform is used for receiving a first electrode sheet at the first stacking position, the stacking platform is used for receiving a second electrode sheet at the second stacking position, and the polarities of the first electrode sheet and the second electrode sheet are opposite;
the output part has a first output position and a second output position in the first direction, the output part and the stacking platform can move in opposite directions, and the output part is configured to switch between the second output position and the first output position when the stacking platform switches between the first stacking position and the second stacking position, so as to stack the first electrode sheet, the separator, and the second electrode sheet.

2. The stacking device according to claim 1, wherein the separator unwinding mechanism comprises a frame, the output part is movably disposed on the frame in the first direction, and the output part is configured to be movable relative to the frame in the first direction so as to switch between the first output position and the second output position.

3. The stacking device according to claim 2, wherein the separator unwinding mechanism comprises a first driving mechanism which is connected to the output part and is used for driving the output part to move in the first direction, so that the output part switches between the first output position and the second output position.

4. The stacking device according to any one of claims 1-3, wherein the output part comprises:
a mounting base; and
a roller set disposed on the mounting base, wherein the roller set comprises a first roller and a second roller, the first roller and the second roller are arranged in the first direction, and a gap for the separator to pass through is formed between the first roller and the second roller.

5. The stacking device according to claim 4, wherein the output part comprises a plurality of roller sets arranged in a second direction which is a stacking direction of the first electrode sheet, the separator, and the second electrode sheet.

6. The stacking device according to any one of claims 1-5, wherein the stacking apparatus comprises a base, the stacking platform is movably disposed on the base in the first direction, and the stacking platform is configured to be movable relative to the base in the first direction so as to switch between the first stacking position and the second stacking position.

7. The stacking device according to claim 6, wherein the stacking apparatus comprises a second driving mechanism which is connected to the stacking platform and is used for driving the stacking platform to move in the first direction, so that the stacking platform switches between the first stacking position and the second stacking position.

8. The stacking device according to claim 6 or 7, wherein the output part is configured to be movable in the first direction so as to switch between the first output position and the second output position, and a movement direction of the output part is opposite to a movement direction of the stacking platform.

9. The stacking device according to any one of claims 1-8, wherein the stacking apparatus comprises a pressing mechanism which is disposed on the stacking platform and is used for pressing the first electrode sheet, the separator, or the second electrode sheet against the stacking platform.

10. The stacking device according to claim 9, wherein the pressing mechanism comprises:
a pressing member which is used for pressing the first electrode sheet, the separator, or the second electrode sheet against the stacking platform; and
a third driving mechanism which is connected to the pressing member and is used for driving the pressing member to move in the second direction and a third direction, wherein the second direction is the stacking direction of the first electrode sheet, the separator, and the second electrode sheet, the third direction intersects the second direction, and the first direction intersects a plane in which the second direction and the third direction are located.

11. The stacking device according to claim 10, wherein the pressing members are provided on both sides of the stacking platform in the first direction; and/or
the pressing members are provided on both sides of the stacking platform in the third direction.

12. The stacking device according to claim 10 or 11, wherein the pressing member comprises a pressing part which is used for contacting the first electrode sheet, the separator, or the second electrode sheet and is sheet-shaped.

13. The stacking device according to any one of claims 1-12, wherein the stacking device comprises a first transfer mechanism which is used for transferring the first electrode sheet to the stacking platform located at the first stacking position; and/or
the stacking device comprises a second transfer mechanism which is used for transferring the second electrode sheet to the stacking platform located at the second stacking position.

14. A stacking system, comprising:
the stacking device according to any one of claims 1-13; and
a gluing device which is used for gluing a battery made by the stacking device.

15. A stacking method applicable to the stacking apparatus according to any one of claims 1-13, comprising:
providing a first electrode sheet;
outputting, by the output part, a separator;
providing a second electrode sheet;
receiving, by the stacking platform, the first electrode sheet, the separator, and the second electrode sheet; and
driving the output part and the stacking platform to move in opposite directions, so as to stack the first electrode sheet, the separator, and the second electrode sheet on the stacking platform.

16. The stacking method according to claim 15, wherein in the step of driving the output part and the stacking platform to move in opposite directions, the stacking method comprises driving the output part and the stacking platform to move in opposite directions, so as to stack the first electrode sheet, the separator, and the second electrode sheet on the stacking platform.

17. The stacking method according to claim 16, wherein in the step of driving the output part and the stacking platform to move in opposite directions, the stacking method comprises:
controlling the moving speed V₁ of the output part and the moving speed V₂ of the stacking platform, so that 0.8≤V₁/V₂≤1.2.

18. The stacking method according to claim 16 or 17, wherein in the step of driving the output part and the stacking platform to move in opposite directions, the stacking method comprises:
controlling the moving speed V₁ of the output part and the moving speed V₂ of the stacking platform, so that 0.9≤V₁/V₂≤1.1.

19. The stacking method according to any one of claims 16-18, wherein in the step of driving the output part and the stacking platform to move in opposite directions, the stacking method comprises:
controlling the moving speed V₁ of the output part and the moving speed V₂ of the stacking platform, so that V₁=V₂.
